# EUROPÄISCHE PATENTSCHRIFT

(11) **EP 2 297 676 B1**
(45) Veröffentlichungstag und Bekanntmachung des Hinweises auf die Patenterteilung: **04.03.2015**
(21) Anmeldenummer: 09753815.1
(22) Anmeldetag: 20.05.2009
(51) Int. Cl.: G06T 7/00, G06K 9/40

(54) **VERFAHREN UND VORRICHTUNG ZUR VERMEIDUNG VON ALIAS-EFFEKTEN BEI DER OPTISCHEN ERKENNUNG VON TRANSPORTBEHÄLTNISSEN**
METHOD AND DEVICE FOR AVOIDING ALIAS EFFECTS IN THE OPTICAL RECOGNITION OF TRANSPORT CONTAINERS
PROCÉDÉ ET DISPOSITIF POUR ÉVITER DES EFFETS DE CRÉNELAGE LORS DE LA RECONNAISSANCE OPTIQUE DE RÉCIPIENTS DE TRANSPORT

(30) Priorität: 28.05.2008 DE 102008025659
(43) Veröffentlichungstag der Anmeldung: 23.03.2011
(73) Patentinhaber: Wincor Nixdorf International GmbH, 33106 Paderborn (DE)
(72) Erfinder: MASCHOTTA, Ralph, 33106 Paderborn (DE)
(86) Internationale Anmeldenummer: PCT/EP2009/056132
(87) Internationale Veröffentlichungsnummer: WO 2009/144160

(56) Entgegenhaltungen:
- WO-A-2009/063326
- WO-A1-2006/045285
- US-A- 5 915 047
- US-A1- 2003 099 044
- "Regelbasierte Kantenerkennung zur schnellen kantenbasierten Segmentierung der Glottis in Hochgeschwindigkeitsvideos" BILDVERARBEITUNG FÜR DIE MEDIZIN 2005, ALGORITHMEN-SYSTEME-ANWENDUNGEN, PROCEEDINGS DES WORKSHOPS, PART 2, 13. März 2005 (2005-03-13), Seiten 188-192, XP002544587 Springer Berlin Heidelberg ISBN: 978-3-540-25052-4
- Hall E.L.: "Computer Image Processing and Recognition", 1979, Academic Press, Inc., NY ISBN: 0-12-318850-4 pages 93-94, * page 93; figure 3.10 * * page 94, paragraph 2 - paragraph 3 *

## Beschreibung

Die Erfindung betrifft ein Verfahren zur Vermeidung von Alias-Effekten bei der optischen Erkennung von Transportbehältnissen gemäß dem Oberbegriff des Anspruchs 1 sowie eine das Verfahren ausführende Vorrichtung.

Insbesondere betrifft die Erfindung ein Verfahren zur Vermeidung von Alias-Effekten (Aliasing-Effekten) bei der optischen Erkennung von Transportbehältnissen in Gestalt von Getränkekästen und sonstigem Leergut sowie eine Vorrichtung in Gestalt eines Leergutrückgabesystems.

Bei der optischen Erkennung von Transportbehältnissen, wie sie insbesondere in Leergut-Rückgabesystemen durchgeführt wird, kommen üblicherweise Kameras und Bildverarbeitungssysteme zum Einsatz, die grafische Kennzeichnungen erkennen sollen, wie z.B. Schriftzüge, Bildelemente bzw. sog. Labels, mit denen die Transportbehältnisse versehen sind. Dazu machen die Kameras fotografische Aufnahmen, die dann in einer Bildverarbeitung z.B. anhand von Mustererkennung ausgewertet werden, um die jeweilige Kennzeichnung eindeutig zu erkennen. Üblicherweise wird versucht, die Optik der Kameras dazu auf die Bildebene der grafische Kennzeichnung (Logo-Ebene) zu fokussieren, um die Aufnahme möglichst scharf einzustellen. Da jedoch die abgelichteten Objekte, also die Transportbehältnisse bzw. Getränkekästen, häufig keine glatte Oberflächenstruktur aufweisen, kann es bei der Bildaufnahme, insbesondere wenn Farbkameras eingesetzt werden, zu Alias-Effekten (Farbalising) kommen. Denn die Farbauflösung der Kameras ist in der Regel deutlich geringer ihre Grauwertauflösung. Aber auch bei Schwarz-Weiß-Kameras, die eine geringe Grauwertauflösung aufweisen, können Alias-Effekte auftreten.

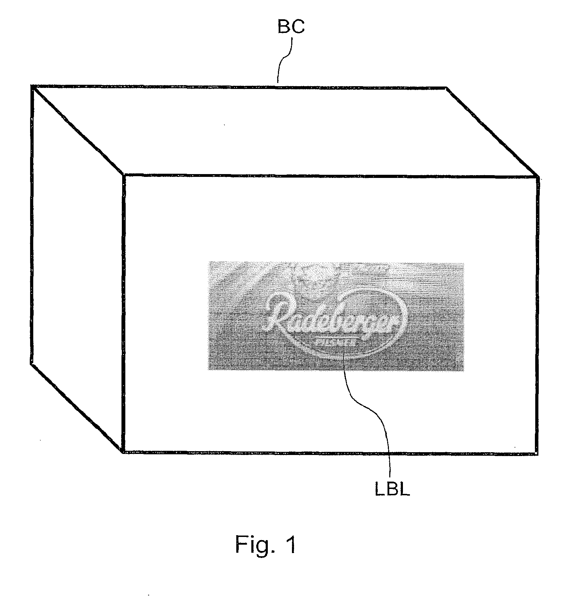

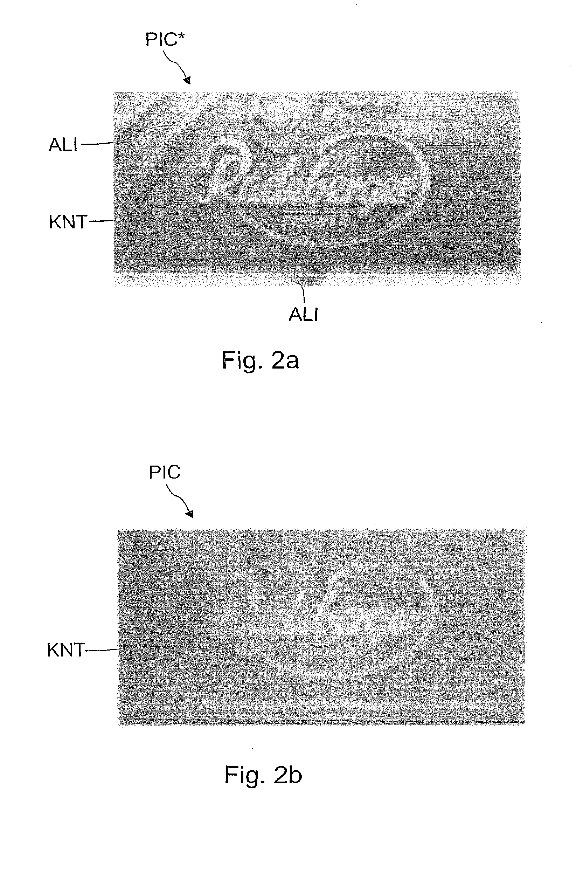

Anhand der Fig. 1 und 2a wird diese Situation veranschaulicht:
Die Fig. 1 zeigt schematisch ein als Getränkekasten BC gestaltetes Transportbehältnis, das als Leergut in ein (nicht dargestelltes) Leergut-Rückgabesystem eingebracht wird und dort erkannt werden soll. Auf dem Getränkekasten BC sind Kennzeichnungen LBL in Form von Schriftzügen und Bildzeichen angebracht, die den Eigentümer des Getränkekastens (hier eine Brauerei) angeben.

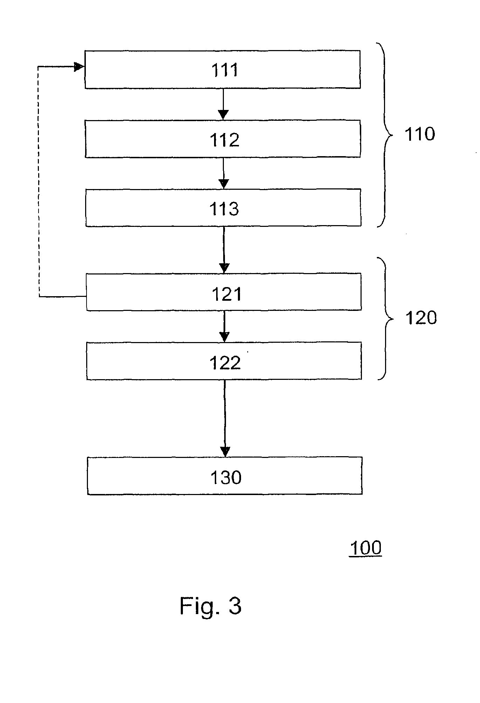

Die Fig. 2a zeigt eine nach herkömmlicher Methode gemachte fotografische Aufnahme PIC* der Kennzeichnung LBL. Es ist zu erkennen, dass aufgrund einer zu niedrigen Bildauflösung, insbesondere Farbauflösung, in der Aufnahme PIC* störende Alias-Effekte bzw. Aliasing-Effekte ALI erscheinen. Insbesondere bilden sich Scheinmuster aus, wie z.B. Moire-Ringe, die eine spätere Bildverarbeitung und Mustererkennung deutlich erschweren würden. Es ist an sich bekannt, dass durch ein Unscharfstellen der Kameraoptik solche Alias-Effekt vermieden werden können. (siehe z.B. den Ausschnitt Kap. 3.2 auf Seite 94, insbesondere Abs. 2-3 sowie Abb. 3.10 aus dem Buch "Computer Image Processing And Recognition" von Ernest L. Hall, publiziert 1979 von Academic Press, Inc. New York (ISBN: 0-12-318850-4). Jedoch werden dann evtl. derart unscharfe Aufnahmen gemacht, die kaum noch oder garnicht
dafür geeignet sind, das jeweilige Transportbehältnis bzw. den Getränkekasten BC zuverlässig zu erkennen.

Die WO 2006/045285 A1 offenbart eine Vorrichtung zur dreidimensionalen Vermessung von Objekten, wie Behältern, insbesondere Flaschen und Flaschenkästen mit eingestellten Flaschen. Hierfür ist eine Stereo-Abbildung des Objekts durch zwei Kameras vorgesehen, die oberhalb des Objektes angeordnet sind und einen im Wesentlichen achsenparallelen Strahlengang aufweisen. Zur Beleuchtung des Objekts ist eine im Wesentlichen ringförmige Lichtquelle vorgesehen, die zwischen dem Objekt und der Kamera angeordnet ist und eine Beleuchtung des Objekts ermöglicht.

Die US 5 915 047 A offenbart ein Bildaufnahmegerät, das in der Lage ist, beim Auftreten von Moiré-Effekten diese zu reduzieren ohne Einsatz von optischen Tiefpassfiltern und ohne die Bildqualität zu verringern. Dazu ist eine Schaltung am Ausgang eines Bildsensors zum Erfassen des Umfangs an Aliasing-Verzerrung (Moiré) vorgesehen, die auftritt, wenn eine Abtastung im Intervall eines Pixel-Abstandes des Bildsensors erfolgt. Auf der Basis des erfassten Umfangs (Quantität) an Aliasing-Verzerrung wird der Abstand zwischen der fotografischen Linse und dem Bildsensor variiert oder es wird auf das Ausgangssignal des Bildsensors eine elektrische Verarbeitung angewendet, wodurch der Moiré-Effekt reduziert wird. Auch wird ein Bildsignal, das erscheint, wenn die Linse abweichend von der In-Fokus-Position eingestellt ist, von einem Bildsignal subtrahiert, welches erscheint, wenn sich die Linse in der In-Fokus-Position befindet, wodurch nur eine Moiré-Komponente separiert wird, um von dem Bildsignal subtrahiert zu werden, das erscheint, wenn sich die Linse in der In-Fokus-Position befindet.

In der US 2003/099044 A1 wird eine Autofokus-Vorrichtung offenbart, bei verhindert werden soll, dass die Fokusposition aufgrund von Pseudospitzen sich falsch einstellt, und ein Gegenstand in den richtigen Fokuszustand gebracht werden soll. Dazu extrahiert eine Autofokussteuereinheit aus einem Bildsignal eine Bildkomponente im Fokusbewertungsbereich, wenn die Fokuslinse sich in einer bestimmten Position befindet. Eine Kontrastberechnungseinheit berechnet einen Kontrastwert auf der Basis der Bildkomponente und liefert diesen an eine Fokussierungssteuereinheit Eine Kantenberechnungseinheit berechnet die Anzahl der Kanten und einen Kantenbreiten-Schwerpunktswert auf der Basis der Bildkomponehte und führt dies der Fokussierungssteuereinheit zu. Auf der Grundlage der Anzahl der Kanten und dem Kantenbreiten-Schwerpunktswert bestimmt die Fokussierungssteuereinheit, ob die Fokussierungslinse sich nahe der Fokusposition befindet oder nicht. Wenn dies nicht der Fall ist, dann wird sogar dann, wenn der Kontrastwert eine Spitze aufweist, die Linsenposition nicht als Fokusposition verwendet.

Die WO 2009/063326 A offenbart ein Autofokus-Bildsystem mit einem Bildsensor, der mit einer Steuerung gekoppelt ist. Der Bildsensor erfasst ein Bild, das mindestens eine Kante mit einer Breite aufweist. Die Steuerung erzeugt ein Fokussignal, das eine Funktion der Kantenbreite darstellt. Eine Linse empfängt das Fokussignal und passt den Fokus an. Die Kantenbreite kann mit verschiedenen Techniken, einschließlich der Verwendung von Gradienten, bestimmt werden, Ein Histogramm der Kantenbreiten kann verwendet werden, um festzustellen, ob ein bestimmtes Bild fokussiert ist oder nicht. Ein Histogramm mit einer großen Häufigkeit von dünnen Kantenbreite weist auf fokussiertes Bild hin.

Wünschenswert wäre es, ein Verfahren zur Vermeidung von Alias-Effekten zu haben, bei dem die Kamera auf eine definierte Unschärfe einstellbar ist, so dass die Alias-Effekte vermieden werden und dennoch eine ausreichende Bildschärfe für eine zuverlässige optische Erkennung von Kennzeichnungen auf Transportbehältnissen gegeben ist.

Daher ist es Aufgabe der vorliegenden Erfindung, die oben genannten Probleme des Standes der Technik vorteilhaft zu überwinden. Insbesondere soll eine technisch gut zu realisierende Lösung zur Vermeidung von Alias-Effekten bei der optischen Erkennung von Transportbehältnissen vorgeschlagen werden.

Gelost wird die Aufgabe durch ein Verfahren mit den Merkmalen des Anspruchs 1 und ebenso durch eine Vorrichtung mit den Merkmalen des nebengeordneten Anspruchs.

Demnach wird ein Verfahren zur Vermeidung von Alias-Effekten bei der optischen Erkennung von Transportbehältnissen vorgeschlagen, bei dem die Optik der Kamera auf eine definierte Unschärfe eingestellt wird, die mittels einer Bildverarbeitung der Kamera-Aufnahme ermittelt wird, bei der eine Länge von Kantenübergängen von Schwarz-Weiß-Kanten ermittelt wird, wobei die Ermittlung der Länge von Kantenübergängen anhand der Auswertung von Zuständen eines deterministischen endlichen Automaten mittels Gradientenfiltern erfolgt, und dass die Ermittlung der Länge von Kantenübergängen mittels mindestens zwei Gradientenfiltern. erfolgt, die verschiedene Filterlängen aufweisen.

Vorgeschlagen wird auch eine Vorrichtung zur Vermeidung von Alias-Effekten bei der optischen Erkennung von Transportbehältnissen, die eine Kamera aufweist, die zumindest von dem Teil des Transportbehältnisses, der mit der optischen Kennzeichnung versehen ist, eine fotografische Aufnahme macht, wobei die Vorrichtung Rechenmittel und Einstellmittel aufweist, die die Kamera, insbesondere die Optik der Kamera, auf eine definierte Unschärfe einstellen, wobei die Einstellmittel die Unschärfe in Abhängigkeit einer Länge von Kantenübergängen von Schwarz-Weiß-Kanten einstellen, die die Rechenmittel mittels einer Bildverarbeitung der Aufnahme ermitteln, wobei die Ermittlung der Länge von Kantenübergängen anhand der Auswertung von Zuständen eines deterministischen endlichen Automaten mittels Gradientenfiltern erfolgt, und wobei die Ermittlung der Länge von Kantenübergängen mittels mindestens zwei Gradientenfiltern erfolgt, die verschiedene Filterlängen aufweisen.

Die ermittelte Länge von Kantenübergängen gibt dabei ein Maß an für die mittlere Länge von den Ubergängen. d.h. ansteigenden bzw. abfallenden Flanken der Schwarz-Weiß-Kanten und wird hier nachfolgend auch als mittlere Kantenlänge bezeichnet.

Dadurch wird erreicht, dass die Unschärfe der Kamera so eingestellt werden kann, dass das Aliasing gerade so eben verhindert wird und die Bildschärfe aber ausreicht, um eine zuverlässige Mustererkennung durchzuführen. Die Kamera kann nun auf einen optimalen Unschärfepunkt fokussiert werden, der außerhalb der eigentlichen Bildebene liegt, aber dennoch eine nicht zu große mittlere Kantenlänge aufweist. sondern eine dazu definiert eingestellten Abstand aufweist.

Gemäß der Erfindung erfolgt die Ermittlung der mittleren Kantenlänge anhand der Auswertung von Zuständen eines deterministischen endlichen Automaten (Finite State Automaton) mittels zweier Gradien¬tenfiltern, die verschiedene Filterlängen aufweisen. Dabei kann die Kantenlänge dadurch ermittelt werden, dass gemessen wird, wie lange der Automat in einem Zustand verweilt, bevor ein Übergang zu einem anderen Zustand auftritt. Der Übergang zeigt dabei jeweils einen Anfang oder ein Ende für die zu ermittelnde Kantenlänge der Schwarz-Weiß-Kante an.

Bevorzugte Ausführungsformen der Erfindung sind den Unter ansprüchen zu entnehmen.

Demnach wird vorzugsweise die Unschärfe der Kamera auf einen außerhalb der Bildebene der grafischen Kennzeichnung liegenden Fokuspunkt so eingestellt, dass in der fotografischen Aufnahme eine maximal vorgebbare mittlere Kantenlänge, nicht überschritten und auch nicht unterschritten wird. Für die eingestellte Unschärfe der Kamera kann geprüft werden, ob in der fotografische Aufnahme die mittlere Kantenlänge nicht unterhalb eines Wertes liegt, der für die Bildebene der grafischen Kennzeichnung ermittelt wird, um zu prüfen, dass die Kamera auf einen Fokuspunkt eingestellt ist, der vor der Bildebene liegt. Dadurch wird verhindert, dass an der Kamera der falsche Unscharfepunkt eingestellt wird. Denn wenn der neu eingestellte Fokussierungspunkt der Kamera hinter der Bildebene liegen sollte, so würde die Aufnahme mit zunehmendem Abstand zwischen Bild und Kamera schärfer werden. Mit Hilfe dieser Maßnahme wird sichergestellt, dass immer ein optimaler Unschärfepunkt (neuer Fokussierungspunkt) bestimmt wird, der vor der eigentlichen Bildebene liegt.

Bevorzugt wird die mittlere Kantenlänge durch Bestimmung von Kantenanstiegen, insbesondere durch deren Gradienten, ermittelt.

Vorzugsweise wird das Verfahren von einer Vorrichtung ausgeführt die als Leergut-Rückgabeautomat gestaltet ist, der Transportbehältnisse in Gestalt von Getränkekasten erkennt.

Die Erfindung macht sich eine Bildverarbeitung zu nutze, bei der die Länge von Kantenübergängen, insbesondere von Kantenanstiegen, erkannt wird, um den optimalen Einstellpunkt für die Kamera-Fokussierung zu finden.

Ein gesonderter Kalibrierungskörper ist nicht für die Ermittlung des Einstellpunktes (Unschärfepunkt) erforderlich. Die Unschärfe kann mit Hilfe jedes im Bild vorhandenen gleichbleibenden Schwarz-Weiß-Bereichs optimal eingestellt werden. Dabei wird auch geprüft, ob Kamera so eingestellt ist, dass die Unschärfe nach hinten nicht abnimmt.

Die Erfindung und die sich daraus ergebenden Vorteile werden nun im Detail anhand von Ausführungsbeispielen und unter Bezugnahme auf die beiliegenden schematischen Zeichnungen beschrieben, die folgendes darstellen:
- Fig. 2b: zeigt im Vergleich zur Fig. 2a eine erfindungsgemäß deutlich verbesserte Aufnahme des Logos mit einer Kamera-Einstellung, die nach einem definierten Unschärfepunkt erfolgt, so dass keine Alising-Effekte auftreten, aber dennoch eine ausreichende Bildschärfe erhalten bleibt;
- Fig. 3: zeigt ein Ablaufdiagramm für ein erfindungsgemäßes Verfahren;
- Fig. 4: zeigt ein Zustandsdiagramm eines erfindungsgemäß verwendeten Automaten; und
- Fig. 5a: veranschaulicht die Einstellung der Kamera-Optik; und
- Fig. 5b: veranschaulicht die Kantenlängen von diffusen Schwarz-Weiß-Kanten.

Wie bereits eingangs beschrieben wird, verdeutlichen die Figuren 1 und 2a die Ausgangssituation der Erfindung anhand des Beispiels eines Getränkekastens BC, der als grafische Kennzeichnung einen Aufdruck oder Etikett bzw. Label LBL aufweist, das von einer Kamera aufgenommen und mittels Bildverarbeitung erkannt werden soll. Da normalerweise für eine fotografische Aufnahme des Labels LBL die Kamera-Einstellung scharf auf die Bildebene fokussiert wird, können aufgrund von Oberflächen-Rauheiten oder auch anderer Gegebenheiten unerwünschte Störungen, insbesondere Alising-Effekte ALI, in der fotografischen Aufnahme PIC* erscheinen, so wie es die Fig. 2a exemplarisch zeigt.

Im Vergleich dazu veranschaulicht Fig. 2b eine mittels der Erfindung erreichten Aufnahme - PIC, die von derartigen Störungen befreit ist. Dazu wird die Kamera-Optik bewusst unscharf eingestellt und zwar auf einen definierten Wert bzw. Fokuspunkt, so dass insbesondere die Alising-Effekte nicht mehr erscheinen, die Bildschärfe bzw. Konturen KNT aber dennoch hinreichend scharf sind, um von einer Bilderkennung sicher zuverlässig verarbeitet werden zu können.

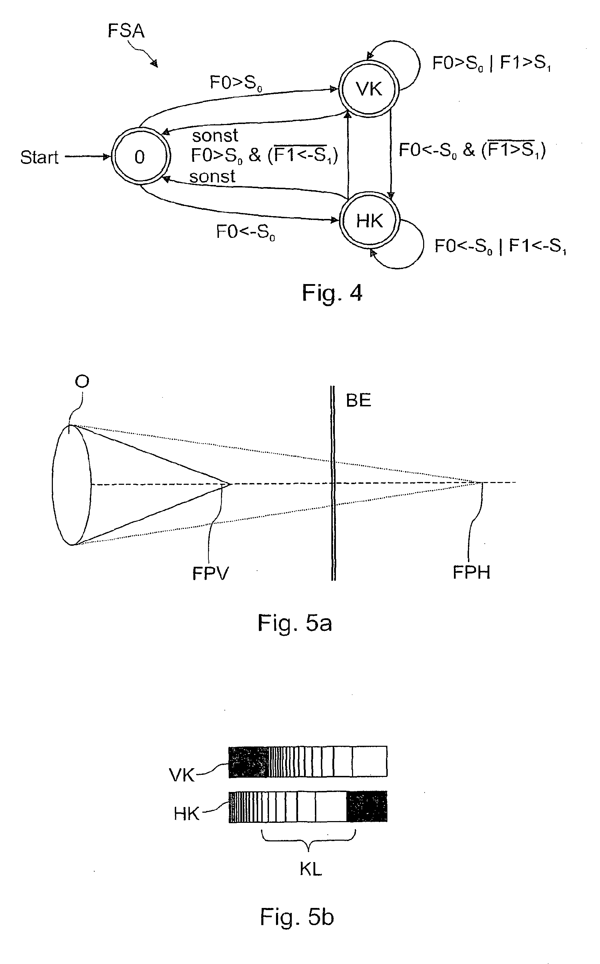

Anhand des in der Fig. 3 dargestellten Auflaufdiagramms wird nachfolgend ein Ausführungsbeispiel eines erfindungsgemäßen Verfahrens 100 beschrieben. Dabei wird auch auf die Fig. 4 und 5a/b Bezug genommen:
Durch das erfindungsgemäße Verfahren 100 wird insbesondere erreicht, dass die Kamera-Optik O (s. Fig. 5a) auf einen optimalen Unschärfepunkt bzw. vorderen Fokussierpunkt FPV eingestellt wird, der vor der eigentlichen Bildebene BE liegt, und dass nicht etwa auf einen komplementären hinteren Fokussierpunkt FPH eingestellt wird. Dieser falsche Fokussierpunkt FPH würde zwar auch dieselbe optische Unschärfe aufweisen, würde aber bei (auch nur leichter) Verschiebung des fotografierten Objektes nach hinten (also von der Kamera weg) eine schärfer werdende Aufnahme bewirken, was kontraproduktiv zum Ziel der Erfindung sein würde.

Die Erfindung stellt also die Kamera nicht nur auf eine definierte Unschärfe ein, sondern sorgt auch dafür, dass die Einstellung auf den richtigen Fokussierpunkt erfolgt.

Zur eigentlichen Einstellung der Unschärfe wird eine Kantendetektion, insbesondere die Detektion von Kantenlängen, verwendet, wobei vorzugsweise ein Automat FSA eingesetzt wird, dessen Zustandsdiagramm in Fig. 4 veranschaulicht ist. Der Automat kann zwischen Zuständen unterscheiden, die sich auf das Vorhandensein einer sog. Vorderkante VK oder einer sog. Hinterkante HK beziehen. Dabei ist der Übergang von Schwarz nach Weiß bzw. von Weiß nach Schwarz gemeint, so wie dies die Fig. 5b veranschaulicht.

Ausgehend von einem Start-Zustand "0" prüft der Automat FSA anhand von zwei Gradientenfiltern F0 und F1, die verschiedene Filterlängen von z.B. 2 Pixel bzw. 5 Pixeln aufweisen, ob eine Vorderkante VK oder eine Hinterkante HK vorliegt. Liegt das erste Filterergebnis für FO über einem Schwellwert S0 (F0>S0), so wird der Zustand "VK" eingenommen, also eine Vorderkante erkannt. Andernfalls wird der Zustand "HK" angenommen. Der Automat FSA verweilt in dem jeweiligen Zustand so lange, wie auch das zweite Filterergebnis F1 unter bzw. über einem Schwellwert S1 liegt. Erst wenn dies nicht der Fall ist, wird in den anderen Zustand gewechselt. So wird z.B. vom Zustand "VK" erst dann in den Zustand "HK" gewechselt, wenn gilt: F0<S0 und F1>S1. Ein Zustandswechsel zeigt dabei den Anfang bzw. das Ende eines Kantenanstiegs an (s. auch Fig. 5b). Hierdurch kann zuverlässig und anhand von beliebigen Kanten die Kantenlänge KL bestimmt werden. Es müssen keine Musterkanten bzw. Kalibiervorlagen verwendet werden. Die Bestimmung der Kantenlänge KL kann direkt an dem jeweils vorliegenden festgelegten bzw. konstanten Bild oder Label LBL vorgenommen werden.

Das Verfahren 100 (s. Fig. 3) beginnt mit einem Schritt 111, bei dem zwei Gradientenfilter F0 und F1 (s. auch Fig. 4) jeweils auf das Bild PIC* angewendet werden, die verschiedene Filterlängen aufweisen. Dabei ist F0 ein reiner Gradientenfilter und F1 ein modifizierter Gradientenfilter, der zusätzlich einen Binominalfilter zur Glättung des Bildes aufweist. Die jeweilige Filterung entspricht einer Faltung, so dass sich zwei Filterergebnisse ergeben.

In einem nächsten Schritt 112 erfolgt die Verknüpfung der Ergebnisse der Faltungen mit dem zuvor beschriebenen endlichen Automaten FSA. Dadurch kann in einem Schritt 113 die Ermittlung der Längen KL von Kantenanstiegen bzw. die Kantenlänge durchgeführt werden.

Mit Hilfe der bestimmten Kantenlänge KL wird dann im Schritt 121 die Einstellung der Kameraoptik auf eine definierte Unschärfe vorgenommen. Dabei wird auf die vordere Kalibrierebene (Fokussierpunkt FPV) eingestellt.

Im Rahmen einer fortlaufenden Wiederholung der Schritte 111 bis 121 wird die Kameraoptik bzw. ihr Fokussierpunkt solange verstellt, bis die Bildaufnahme eine mittlere Kantenlänge KL aufweist, die einem Sollwert (Idealwert) entspricht. Ist das der Fall, so wird mit dem Schritt 122 fortgefahren.

Durch eine im Schritt 122 durchgeführte Überprüfung, ob die eingestellte Unschärfe nach hinten nicht abnimmt, wird sicher gestellt, dass es sich dabei um den richtigen Fokussierpunkt FPV handelt. Die Prüfung erfolgt also quasi anhand der hinteren Kalibrierebene (Fokussierpunkt FPH).

Schließlich kann im Schritt 130 die mittels der definiert unscharf eingestellten Kamera gewonnene Aufnahme PIC des Labels LBL zur Weiterverarbeitung und Mustererkennung herangezogen werden.

Die Erfindung ist besonders geeignet, in einem Lehrgut-Rückgabesystem implementiert zu werden.

### Bezugszeichenliste

- BC: Transportbehältnis, hier in gestalt eines Getränkekastens
- LBL: Kennzeichnung (Label), hier als Schriftzug und Bildelement
- PIC*: Aufnahme mit Alias-Effekten
- ALI: Alias-Effekt, insbeondere durch Farbalising
- KNT: Konturen, scharf
- PIC: Aufnahme ohne Alias-Effekte, mit definierter Unschärfe
- KNT': Konturen, leicht unscharf

- 100: Verfahren mit Schrittfolgen 110-130

- FSA: endlicher Automat (Zustandsdiagramm)
- VK: vordere Kante (Automaten-Zustand)
- HK: hintere Kante (Automaten-Zustand)
- F0: Gradientenfilter mit kleiner Filterlänge
- F1: Gradientenfilter mit größerer Filterlänge

- 0: Kamera-Optik
- BE: Bildebene
- FPV: vorderer Fokussierpunkt (optimaler Unschärfepunkt)
- FPH: hinterer Fokussierpunkt (falscher Unschärfepunkt)
- VK: vordere Kante (Automaten-Zustand)
- HK: hintere Kante (Automaten-Zustand)
- KL: Länge der Kantenübergänge (Kantenlänge)

## Patentansprüche

1. Verfahren (100) zur Vermeidung von Alias-Effekten bei einer optischen Erkennung von Transportbehältnissen (BC), insbesondere von Getränkekästen, die jeweils mit mindestens einer grafischen Kennzeichnung (LBL) versehen sind, wobei zumindest von dem Teil des Transportbehältnisses (BC), der mit der optischen Kennzeichnung (LBL) versehen ist, eine fotografische Aufnahme (PIC) mittels einer Kamera gemacht wird (130), **dadurch gekennzeichnet, dass**
die Optik (O) der Kamera auf eine definierte Unschärfe eingestellt wird (120), die mittels einer Bildverarbeitung (110) der Aufnahme (PIC) ermittelt wird, bei der eine Länge (KL) von Kantenübergängen von Schwarz-Weiß-Kanten ermittelt wird, dass die Ermittlung der Länge (KL) von Kantenübergängen anhand der Auswertung von Zuständen (VK, HK) eines deterministischen endlichen Automaten (FSA) mittels mindestens eines Gradientenfilters erfolgt, und dass die Ermittlung der Länge (KL) von Kantenübergängen mittels mindestens zwei Gradientenfilter (F0, F1) erfolgt, die verschiedene Filterlängen aufweisen.

2. Verfahren (100) nach Anspruch 1, **dadurch gekennzeichnet, dass** die Unschärfe der Kamera auf einen außerhalb der Bildebene (BE) der grafischen Kennzeichnung (LBL) liegenden Fokuspunkt (FPV) eingestellt wird, so dass in der fotografische Aufnahme (PIC) eine maximal vorgebbare mittlere Länge (KL) von Kantenübergangen nicht überschritten und nicht unterschritten wird.

3. Verfahren (100) nach Anspruch 1 oder 2, **dadurch gekennzeichnet, dass** für die eingestellte Unschärfe der Kamera geprüft wird, ob in der fotografische Aufnahme (PIC) die Kantenlänge (KL) nicht unterhalb eines Wertes liegt, der für die Bildebene (BE) der grafischen Kennzeichnung (LBL) ermittelt wird, um zu prüfen, dass die Kamera auf einen Fokuspunkt (FPV) eingestellt ist, der vor der Bildebene (BE) liegt (122).

4. Verfahren (100) einem der vorhergehenden Ansprüche, **dadurch gekennzeichnet, dass** die Länge (KL) von Kantenübergängen durch Bestimmung von Kantenanstiegen, insbesondere durch deren Gradienten, ermittelt wird.

5. Verfahren (100) nach Anspruch 1, **dadurch gekennzeichnet, dass** das ein Übergang von einem Zustand (VK, HK) des Automaten (FSA) zu einem anderen jeweils einen Anfang oder ein Ende für die zu ermittelnde Länge (KL) von Kantenübergangen anzeigt.

6. Vorrichtung zur Vermeidung von Alias-Effekten bei der optischen Erkennung von Transportbehältnissen (BC), insbesondere von Getränkekästen, die jeweils mit mindestens einer grafischen Kennzeichnung (LBL) versehen sind, wobei die Vorrichtung eine Kamera aufweist, die zumindest von dem Teil des Transportbehältnisses (BC), der mit der optischen Kennzeichnung (LBL) versehen ist, eine fotografische Aufnahme (PIC) macht,
**dadurch gekennzeichnet, dass**
die Vorrichtung Rechenmittel und Einstellmittel aufweist, die die Optik (O) der Kamera auf eine definierte Unschärfe einstellen, wobei die Einstellmittel die Unschärfe in Abhängigkeit einer Länge (KL) von Kantenübergangen von Schwarz-Weiß-Kanten einstellen, die die Rechenmittel mittels einer Bildverarbeitung der Aufnahme (PIC) ermitteln,
wobei die Ermittlung der Länge (KL) von Kantenübergängen anhand der Auswertung von Zuständen (VK, HK) eines deterministischen endlichen Automaten (FSA) mittels mindestens eines Gradientenfilters erfolgt, und wobei die Ermittlung der Länge (KL) von Kantenübergängen mittels mindestens zwei Gradientenfilter (F0, F1) erfolgt, die verschiedene Filterlängen aufweisen.

7. Vorrichtung nach Anspruch 6, **dadurch gekennzeichnet, dass** die Vorrichtung ein Leergutrückgabeautomat ist, der Transportbehältnisse in Gestalt von Getränkekasten erkennt.

## Claims

1. Method (100) for avoiding aliasing in an optical identification of transport containers (BC), in particular of beverage crates, which are in each case marked with at least one graphical identifier (LBL), wherein a photographic recording (PIC) is made (130) using a camera of at least the part of the transport container (BC) that is marked with the optical identifier (LBL), **characterized in that** the optical unit (0) of the camera is set (120) to a defined blur which is ascertained using image processing (110) of the recording (PIC), in which a length (KL) of edge transitions of black-and-white edges is ascertained, **in that** the ascertainment of the length (KL) of edge transitions using the evaluation of states (VK, HK) of a deterministic finite automaton (FSA) takes place using at least one gradient filter, and **in that** the ascertainment of the length (KL) of edge transitions takes place using at least two gradient filters (F0, F1), which have different filter lengths.

2. Method (100) according to Claim 1, **characterized in that** the blur of the camera is set to a focus point (FPV) located outside the image plane (BE) of the graphical identifier (LBL) such that in the photographic recording (PIC) a maximally specifiable average length (KL) of edge transitions is not exceeded and not undershot.

3. Method (100) according to Claim 1 or 2, **characterized in that** for the set blur of the camera, a check takes place as to whether in the photographic recording (PIC) the edge length (KL) is not below a value which is ascertained for the image plane (BE) of the graphical identifier (LBL) in order to check that the camera is set to a focus point (FPV) which is located (122) in front of the image plane (BE).

4. Method (100) according to one of the preceding claims, **characterized in that** the length (KL) of edge transitions is ascertained by determining edge increases, in particular by way of the gradients thereof.

5. Method (100) according to Claim 1, **characterized in that** a transition from one state (VK, HK) of the automaton (FSA) to a different one indicates in each case a start or an end for the length (KL) to be ascertained of edge transitions.

6. Apparatus for avoiding aliasing in an optical identification of transport containers (BC), in particular of beverage crates, which are provided in each case with at least one graphical identifier (LBL), wherein the apparatus has a camera which takes a photographic recording (PIC) of at least the part of the transport container (BC) that is provided with the optical identifier (LBL), **characterized in that** the apparatus has computing means and setting means which set the optical unit (0) of the camera to a defined blur, wherein the setting means set the blur in dependence on a length (KL) of edge transitions of black-and-white edges which the computing means ascertain by way of image processing the recording (PIC), wherein the ascertainment of the length (KL) of edge transitions on the basis of the evaluation of states (VK, HK) of a deterministic finite automaton (FSA) is carried out using at least one gradient filter, and wherein the ascertainment of the length (KL) of edge transitions is carried out using at least two gradient filters (F0, F1) having different filter lengths.

7. Apparatus according to Claim 6, **characterized in that** the apparatus is a reverse vending machine which identifies transport containers in the form of beverage crates.

## Revendications

1. Procédé (100) pour éviter des effets de crénelage lors d'une reconnaissance optique de récipients de transport (BC), notamment de caisses de boisson respectivement pourvues d'au moins une marque graphique (LBL), un cliché photographique (PIC) étant pris (130) à l'aide d'une caméra, notamment de la partie du récipient de transport (BC) pourvue de la marque optique (LBL) ;
**caractérisé en ce que** :
le système optique (0) de la caméra est réglé (120) sur un flou défini déterminé à l'aide d'un traitement d'image (110) du cliché (PIC) au moyen duquel une longueur (KL) des transitions de bordure des bordures noir et blanc est déterminée, que la détermination de la longueur (KL) des transitions de bordure à l'aide de l'analyse d'états (VK, HK) d'un automate fini déterministe (FSA) s'effectue à l'aide d'au moins un filtre à gradient et que la détermination de la longueur (KL) des transitions de bordure se produit à l'aide d'au moins deux filtres à gradient (F0, F1) présentant différentes longueurs de filtre.

2. Procédé (100) selon la revendication 1, **caractérisé en ce que** le flou de la caméra est réglé sur un point focal (FPV) situé à l'extérieur du plan d'image (BE) de la marque graphique (LBL), de sorte qu'une longueur moyenne (KL) maximale prédéfinissable des transitions de bordure ne peut pas être dépassée ni à la hausse ni à la baisse dans le cliché photographique (PIC).

3. Procédé (100) selon la revendication 1 ou 2, **caractérisé en ce que** l'on vérifie pour le flou réglé de la caméra si la longueur de bordure (KL) ne se situe pas en dessous d'une valeur dans le cliché photographique (PIC), ladite valeur étant déterminée pour le plan d'image (BE) de la marque graphique (LBL), pour contrôler que la caméra est réglée sur un point focal (FPV) placé (122) devant le plan d'image (BE).

4. Procédé (100) selon l'une des revendications précédentes, **caractérisé en ce que** la longueur (KL) des transitions de bordure est déterminée par détermination des pentes de bordure, notamment par leur gradient.

5. Procédé (100) selon la revendication 1, **caractérisé en ce que** la transition d'un état (VK, HK) de l'automate (FSA) à un autre début ou fin, respectivement, indique une fin de la longueur (KL) des transitions de bordure à déterminer.

6. Dispositif pour éviter des effets de crénelage lors de la reconnaissance optique de récipients de transport (BC), notamment de caisses de boisson respectivement pourvues d'au moins une marque graphique (LBL), le dispositif comportant une caméra prenant un cliché photographique (PIC), notamment de la partie du récipient de transport (BC) pourvue de la marque optique (LBL) ;
**caractérisé en ce que** :
le dispositif comporte des moyens de calcul et des moyens de réglage réglant le système optique (0) de la caméra sur un flou défini, les moyens de réglage réglant le flou en fonction d'une longueur (KL) des transitions de bordure des bordures de noir et blanc que les moyens de calcul déterminent à l'aide d'un traitement d'image du cliché (PIC), la détermination de la longueur (KL) des transitions de bordure à l'aide de l'analyse d'états (VK, HK) d'un automate fini déterministe (FSA) se produisant à l'aide d'au moins un filtre à gradient et la détermination de la longueur (KL) des transitions de bordure se produisant à l'aide d'au moins deux filtres à gradient (F0, 1) présentant différentes longueurs de filtre.

7. Dispositif selon la revendication 6, **caractérisé en ce que** le dispositif est un automate de boissons vides reconnaissant des récipients de transport prenant la forme de caisses de boisson.
